Europäisches Patentamt

European Patent Office

Office européen des brevets

(11) Numéro de publication: **0 277 865**
**A2**

## DEMANDE DE BREVET EUROPEEN

(21) Numéro de dépôt: **88400128.0**

(22) Date de dépôt: **21.01.88**

(51) Int. Cl.4: **C 12 C 3/00**
**C 12 C 3/02**

(30) Priorité: **27.01.87 FR 8700951**

(43) Date de publication de la demande:
**10.08.88 Bulletin 88/32**

(84) Etats contractants désignés:
**BE CH DE GB IT LI NL SE**

(71) Demandeur: **ELECTRICITE DE FRANCE Service National**
**2, rue Louis Murat**
**F-75008 Paris (FR)**

**CLEXTRAL**
**Tour Fiat 1 place de la Coupole**
**F-92400 Courbevoie (FR)**

(72) Inventeur: **Haas, Jean Luc**
**25 rue du Moulin de la Vierge**
**F-75014 Paris (FR)**

**Deymie, Bernard**
**1 bis rue du Manège**
**F-54000 Nancy (FR)**

**Millet, Pierre**
**2, impasse St Livier**
**F-54130 Saint Max (FR)**

**Billon, Michel**
**41 rue Emile Zola**
**F-42240 Unieux (FR)**

(74) Mandataire: **Lanceplaine, Jean-Claude et al**
**CABINET LAVOIX 2, Place d'Estienne d'Orves**
**F-75441 Paris Cedex 09 (FR)**

(54) Procédé de pré-isomérisation du houblon pour la préparation d'une boisson notamment de la bière.

(57) La présente invention a pour objet un procédé de pré-isomérisation du houblon notamment pour la préparation d'une bière ou d'une boisson analogue obtenue à partir de malt uniquement ou à partir de malt et d'au moins une céréale de substitution dans une ligne de préparation comprenant une opération d'obtention d'un moût sucré (6) et une opération de fermentation (9) dudit moût en présence de levures (10). La pré-isomérisation est réalisée par cuisson-extrusion du houblon à une température inférieure à 120°C par passage en continu dudit houblon, préalablement séché et pressé, dans un cuiseur-extrudeur (20) à au moins deux vis, avec une quantité d'eau inférieure à 50 % en poids, le houblon extrudé étant ensuite mélangé au moût sucré dans la ligne de préparation de la boisson.

FIG.1

EP 0 277 865 A2

**Description**

Procédé de pré-isomérisation du houblon pour la préparation d'une boisson notamment de la bière

La présente invention a pour objet un procédé de pré-isomérisation du houblon notamment pour la préparation d'une bière ou d'une boisson analogue.

On sait que la bière est généralement préparée à partir du malt, c'est-à-dire d'orge germée, à partir duquel on prépare un moût sucré dans un traitement dit de brassage, ce moût est ensuite soumis, après refroidissement, à une opération de fermentation en présence de levures pour l'obtention d'une boisson alcoolisée. Le malt est d'abord concassé dans un moulin et la farine obtenue est mélangée avec de l'eau dans un hydrateur pour l'opération d'empâtage. La solution obtenue est ensuite envoyée dans une cuve dite cuve matière dans laquelle se produit la saccharification de l'amidon.

Le moût sucré ainsi obtenu subit ensuite des opérations successives de filtration, de cuisson et de houblonnage.

Le houblon est donc un additif traditionnel en brasserie qui, ajouté au moût sucré, donne à la bière notamment ses caractéristiques gustatives et désaltérantes par son pouvoir amérisant.

Or, pour être efficace, le houblon doit subir, avant son utilisation, une isomérisation de ses principes actifs. Les conditions d'isomérisation de ses principes actifs et d'épuisement du houblon dans une salle à brasser conventionnelle, destiné à produire du moût de brasserie, sont particulièrement mauvaises.

En effet, le bas pH du moût, le pouvoir absorbant du trouble, entre autres facteurs, limitent la transformation de cette matière première et font apparaître un rendement de houblonnage particulièrement mauvais, de l'ordre de 20 à 30 %, ce rendement est d'autant plus fort que le houblonnage est faible.

Par ailleurs, la chimie du houblon est excessivement complexe et parmi les parties du houblon utiles en brasserie, on distingue principalement les huiles essentielles, les résines, les cires, les lipides et les tanins.

Les huiles essentielles sont constituées par une fraction de la lupuline distallable à la vapeur et non miscible à l'eau, et qui est un mélange complexe d'hydrocarbures et de composés oxygénés.

Les résines et les huiles essentielles jouent, dans la bière, le rôle arômatisant et dans les résines on distingue deux acides qui confèrent au houblon son pouvoir d'amertume et son pouvoir antiseptique, ce sont l'humulone et le lupulone.

Au cours du traitement du houblon, il faut tenir compte du fait que les huiles essentielles sont volatiles, c'est-à-dire qu'il faut éviter de laisser cuire le houblon trop longtemps.

Quant aux résines ameres, elles ont, au contraire, besoin d'une ébullition assez longue, de l'ordre d'une heure, pour se solubiliser de façon stable après polymérisation.

D'autre part, l'ébullition augmente aussi la coloration de la bière ; ceci est dû partiellement à la transformation des sucres en caramel et partiellement à l'oxydation du tanin du houblon.

De plus, le houblon est une matière première chère et on a tout intérêt à l'utiliser dans des conditions optimum d'épuisement.

C'est pourquoi, à ce jour, un certain nombre de méthodes de prétransformation du houblon, avant son utilisation au brassage dans le but d'améliorer le rendement ont été développées. Ces méthodes mettent en oeuvre des artifices chimiques que tous les pays producteurs de bière n'autorisent pas.

Jusqu'à présent, les techniques d'isomérisation utilisent la conversion d'une solution d'alcali. Mais, l'alcali et la température amènent un changement dans la composition du houblon. Cette isomérisation a un rendement au plus de 80 %, car une proportion des acides iso-alpha est hydrolysée en acides humuliniques non amères. Un des problèmes avec le houblon isomérisé est leur stabilité car, l'isomérisation est sensible aux variations de température, de pH, et de la composition du milieu.

L'addition d'extraits isomérisés des houblons à la bière filtrée n'est généralement pas pratiquée d'une manière commerciale, car ajoutés de cette manière, ils ont tendance à augmenter le trouble dans la bière. Toutefois, il est évident que plus on ajoute tard ce houblon dans le procédé de préparation de la bière, plus le rendement est élevé.

Généralement, le houblon isomérisé est dilué dans l'eau et comme il faut un certain temps pour que cela se dilue dans la bière, on ajoute ce produit au début de la période de garde et non pas à la fin. Pour favoriser cette dilution, on ajoute le houblon isomérisé à la bière dans un état turbulent, c'est-à-dire dans une conduite ou une pompe. La majeure partie des pertes de houblon se produisant en fermentation, il est donc préférable d'ajouter les extraits isomérisés avec leur sel alcalin après la fermentation, soit juste avant, soit juste après la filtration.

Mais le principal défaut de la bière utilisant cette sorte de houblon est le moussage exagéré.

Afin de remédier aux inconvénients précités, la présente invention a pour but de fournir un procédé de pré-isomérisation des principes actifs du houblon permettant d'améliorer de manière significative le rendement de houblonnage, tout en obtenant un produit de qualité.

L'invention a donc pour objet un procédé de pré-isomérisation du houblon notamment pour la préparation d'une bière ou d'une boisson analogue obtenue à partir de malt uniquement ou à partir de malt et d'au moins une céréale de substitution dans une ligne de préparation comprenant une opération d'obtention d'un moût sucré et une opération de fermentation dudit moût en présence de levures, caractérisé en ce que la pré-isomérisation est réalisée par cuisson-extrusion du houblon à une température inférieure à 120°C par passage en continu dudit houblon préalablement séché et pressé dans un cuiseur-extrudeur à au moins deux vis, avec une quantité d'eau inférieure à 50 % en poids, le houblon extrudé étant ensuite mélangé au moût sucré dans la ligne de préparation de la boisson.

Selon une autre caractéristique de l'invention, la quantité d'eau introduite avec le houblon dans le cuiseur-extrudeur est comprise entre 35 et 50% en poids et l'eau a un pH compris entre 7 et 9.

Selon encore une autre caractéristique de l'invention, la quantité d'eau introduite avec le houblon dans le cuiseur-extrudeur est comprise entre 20 et 35 % en poids et l'eau a un pH compris entre 9 et 11.

L'invention sera mieux comprise à l'aide de la description qui va suivre donnée uniquement à titre d'exemple et faite en se référant aux dessins annexés sur lesquels :

 - la figure 1 est un schéma d'ensemble d'une installation traditionnelle de préparation de la bière et comprenant un cuiseur-extrudeur pour la pré-isomérisation du houblon selon l'invention ;

 - la figure 2 est une vue en coupe axiale du cuiseur-extrudeur pour la mise en oeuvre du procédé selon l'invention ;

 - la figure 3 est une vue en coupe selon la ligne 3-3 de la figure 2 ;

 - la figure 4 est un schéma d'ensemble d'une installation semi-traditionelle de préparation de la bière comprenant un cuiseur-extrudeur pour la pré-isomérisation du houblon selon l'invention ;

 - la figure 5 est un schéma d'ensemble d'une variante de l'installation semi-traditionnelle de la figure 4.

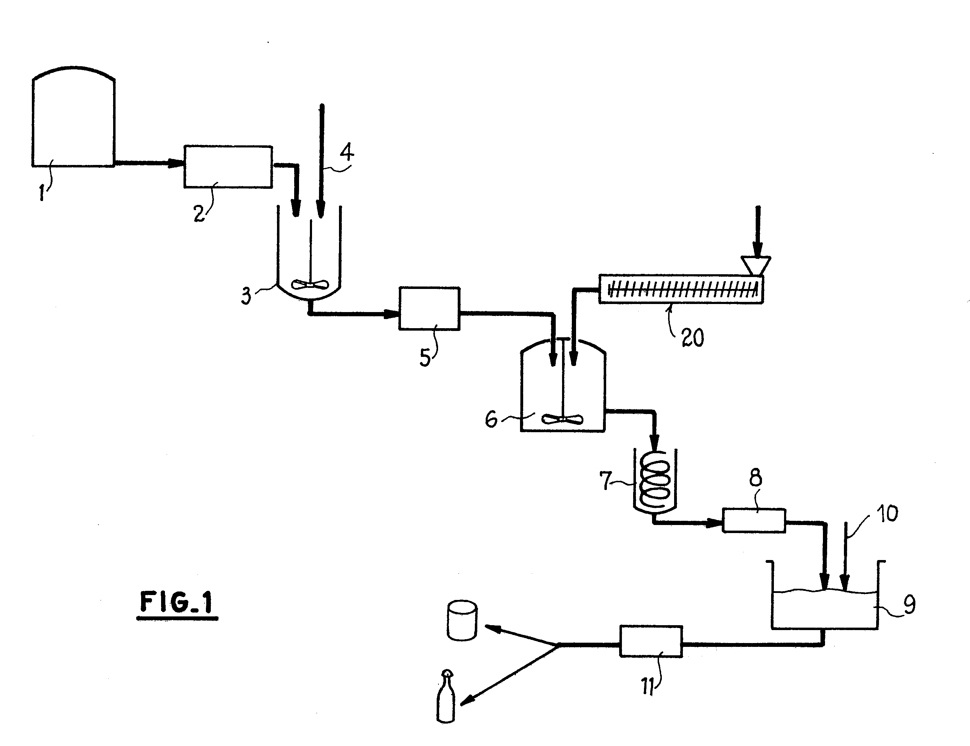

Sur la figure 1, on a représenté schématiquement l'ensemble d'une installation traditionnelle de préparation de la bière à partir uniquement de malt.

La ligne de préparation comprend, à partir d'un silo 1 de stockage du malt, un concasseur 2 et un appareil 3 de pré-empâtage, appelé aussi hydrateur, dans lequel on réalise une pâte par mélange de la farine de malt avec une quantité déterminée d'eau 4. La pâte ainsi préparée passe ensuite dans un filtre 5 puis est envoyée dans un dispositif de saccharification 6 constitué d'une cuve appelée chaudière à moût. Dans cette chaudière à moût, la pâte est soumise à un brassage et on réalise un chauffage par palier pour effectuer dans de bonnes conditions les différentes étapes du traitement de saccharification.

D'autre part, on ajoute dans la chaudière à moût 6, en même temps que la pâte préalablement préparée, le houblon pré-isomérisé selon le procédé de l'invention dans un cuiseur-extrudeur 20 qui sera décrit ultérieurement.

Ensuite, le moût après cuisson et mélange avec le houblon extrudé passe dans un séparateur 7, puis dans un dispositif de refroidissement 8, avant d'être introduit dans une cuve de fermentation 9 pour l'obtention d'une boisson alcoolisée. En effet, c'est au cours de la fermentation, sous l'influence des levures 10, introduites dans la cuve de fermentation 9, que l'alcool apparaît résultant de la transformation des sucres fermentessibles contenus dans le moût refroidi.

A la sortie de la cuve de fermentation 9, la bière ainsi préparée passe dans un filtre 11 pour éliminer le trouble, puis la bière est conditionnée dans des fûts ou mise en bouteilles.

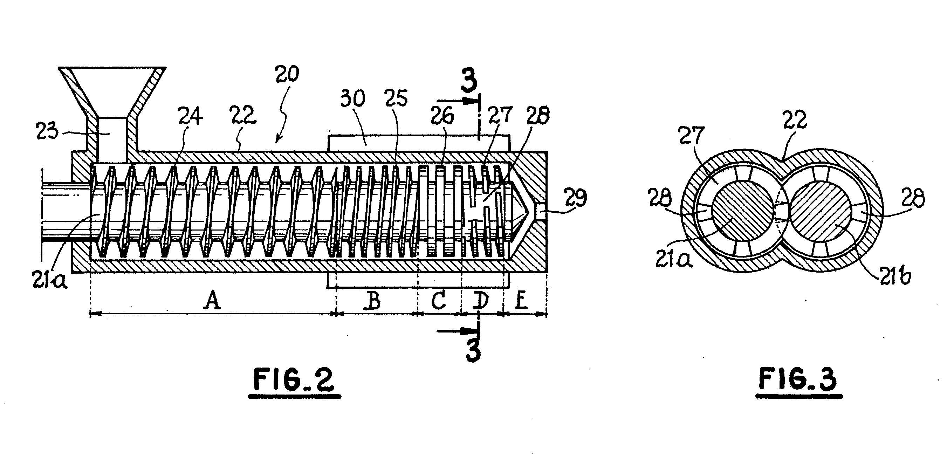

Comme indiqué précédemment, le houblon, avant son introduction dans la chaudière à moût 6, est pré-isomérisé dans un cuiseur-extrudeur 20 représenté plus en détail sur les figures 2 et 3.

Le cuiseur-extrudeur 20 comprend deux vis 21a et 21b entraînées en rotation autour de leurs axes à l'intérieur d'une enceinte allongée formant un fourreau 22 qui les enveloppe. Le fourreau est muni d'un orifice 23 placé à l'une de ses extrémités à sa partie supérieure et il est ouvert à son autre extrémité de telle sorte que la matière introduite en amont par l'orifice 23 et entraînée par la rotation des vis puisse être évacuée à l'extrémité aval.

Les vis 21a et 21b sont munies de filets ou autres organes périphériques qui engrènent l'un dans l'autre et la paroi interne du fourreau 23 forme deux lobes cylindriques sécants, de diamètre intérieur légèrement supérieur au diamètre extérieur des filets ou des organes périphériques. Ces filets sont imbriqués les uns dans les autres et, dans l'exemple représenté, les deux vis 21a et 21b sont entraînées en rotation dans le même sens de telle sorte que les filets sont identiques et simplement décalés l'un par rapport à l'autre.

Les vis 21a et 21b sont constituées avantageusement d'arbres cannelés sur lesquels sont empilés des tronçons de vis constitués de manchons dont la partie intérieure est munie de cannelures correspondant à celles de l'arbre et dont la partie extérieure est munie de filets à pas variés ou autres organes périphériques de traitement et de transport. On peut disposer d'un assez grand nombre de tronçons permettant de faire varier le pas, la profondeur et le nombre des filets ainsi que la longueur de chaque zone.

Le cuiseur-extrudeur 20 est donc constitué de plusieurs zones successives correspondant chacune à une fonction particulière.

On distingue ainsi une zone A d'entraînement vers l'aval, puis une zone B de compression progressive, puis une zone C de malaxage, une zone D de cisaillage et de contre-pression et enfin une zone E d'évacuation de la matière traitée.

Dans la première zone A, les vis 21a et 21b sont munies de filets 24 à pas direct qui transportent la matière introduite par l'orifice 23.

Dans la seconde zone B de compression progressive, les vis 21a et 21b sont munies de filets 25 à pas resserré.

La zone B est suivie d'une zone C de malaxage constituée de disques malaxeurs 26 formés de disques circulaires juxtaposés dont les centres sont décalés angulairement de façon à suivre une ligne tournante en hélice autour de l'axe de la vis.

Dans la zone C, les vis 21a et 21b sont munies de filets 25 à pas inversé dans lesquelles sont ménagées des ouvertures 28 (figure 3) qui s'étendent radialement depuis l'arbre de chaque vis jusqu'à la périphérie du filet et sont en outre réparties régulièrement autour de l'axe. Les vis 21a et 21b sont calées de façon que deux ouvertures 28 viennent périodiquement en coïncidence dans la zone centrale d'entraînement. On contrôle de la sorte le passage à débit contrôlé de matière vers l'aval, ce qui détermine un freinage dans cette zone et de ce fait une compression en amont en augmentant ainsi les effets de laminage.

Enfin, la zone E d'évacuation comporte au moins une filière 29 placée à l'extrémité aval du fourreau 22.

Le long du fourreau 22 sont placés des moyens de chauffage et de régulation de la matière traitée qui s'étendent dans les zones B, C et D.

Le houblon, préalablement séché et pressé, est introduit par l'orifice 23 à l'extrémité amont du cuiseur-extrudeur avec une quantité d'eau déterminée et ayant un pH également déterminé.

Dans la zone de transport A, le houblon se mélange à l'eau et forme ainsi une pâte qui se comprime peu à peu dans la zone B à pas resserré. Les filets se remplissent progressivement et entraînent en rotation sur leur périphérie la pâte que passe d'une vis à l'autre dans la zone d'engrènement des vis 21a et 21b dans laquelle le resserrement de la section de passage détermine une augmentation de pression et un effet de cisaillement accru. La température de la matière traitée augmente sous l'effet du frottement et, éventuellement, du chauffage du fourreau 22 par les moyens 30.

Ensuite, la pâte passe dans la zone C de malaxage constituée par les disque malaxeurs 26. Ainsi, la pâte passe par un espace tournant en hélice et elle est écrasée en même temps contre les parois internes du fourreau 22, ce qui favorise les effets de malaxage et laminage.

La matière formant alors une pâte visqueuse passe dans la zone D munie de filets 27 à pas inversé dans lesquels sont ménagées des ouvertures 28. Une partie de la pâte comprimée à l'intérieur du filet peut passer dans le filet suivant par l'orifice axial ainsi constitué et qui s'ouvre périodiquement. A l'intérieur de la zone D, la pâte est donc soumise à un malaxage intense par effets combinés de compression et de cisaillement et cette zone détermine un freinage et de ce fait une compression en amont en augmentant ainsi les effets de laminage. En outre, sous l'effet du frottement et des moyens de chauffage 30 qui permettent d'assurer une régulation de température de la matière traitée, celle-ci peut être maintenue entre 100° et 120°C et de préférence entre 105°C et 115°C jusqu'à la sortie de la zone D. Ce processus permet d'homogénéiser le mélange par le passage successif dans les différentes zones et par l'extrusion dans la filière 29 qui provoque un effet de laminage supplémentaire.

On obtient ainsi à la sortie du cuiseur-extrudeur un produit prêt à être introduit dans la chaudière à moût 6 en même temps que la pâte obtenue à partir du malt.

On réalise donc une pré-isomérisation du houblon par voie physique, dans un cuiseur-extrudeur, et il apparaît que quatre facteurs essentiels influent sur le rendement d'isomérisation.

Ces quatre facteurs sont la température de la matière qui a intérêt à être la plus élevée possible avec comme limite 120°C à laquelle on assiste à un début de dénaturation du produit, la quantité d'eau associée au houblon pendant l'extrusion, l'action mécanique donnée par la composition des vis du cuiseur-extrudeur et enfin le pH de l'eau.

En effet, on obtient un rendement de houblonnage optimum compris entre 60 et 80 % avec une quantité d'eau de 20 à 35 % en poids et ayant un pH de 9 à 11, ou avec une quantité d'eau de 35 à 50 % en poids et un pH de 7 à 9, la température de la matière étant comprise entre 100°C et 120°C et de préférence entre 105°C et 115°C.

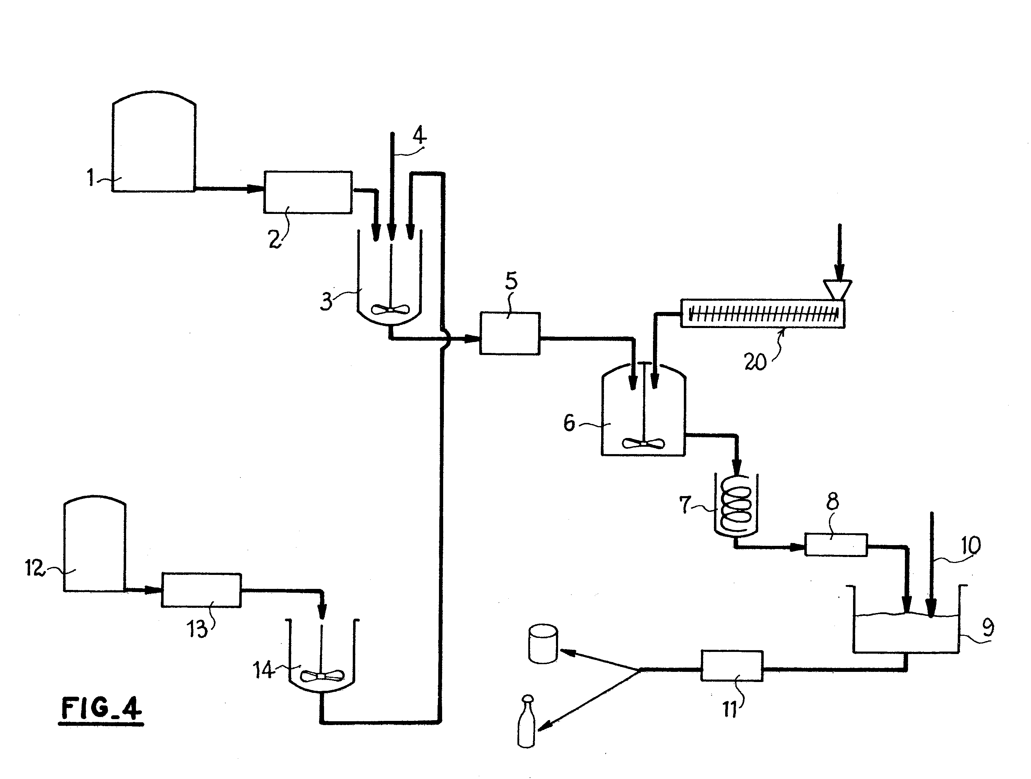

L'installation semi-traditionnelle représentée à la figure 4 comporte de manière identique une ligne de préparation du moût sucré à partir du malt, puis une étape de fermentation et enfin une étape de conditionnement de la bière. La pré-isomérisation du houblon est également réalisée dans un cuiseur-extrudeur et les paramètres d'isomérisation sont les mêmes.

Mais cette installation présente comme particularité d'utiliser en association du malt, ingrédient traditionnel, dans une proportion d'environ 70 % et un produit de substitution appelé grain cru.

A cet effet, parallèlement à la ligne de préparation du malt (1, 2, 3), l'installation comporte une ligne de préparation de la céréale de substitution, par exemple de la brisure de riz. Cette ligne comprend un silo de stockage 12, un concasseur 13 et une chaudière à trempe 14 formée par une cuve munie d'un agitateur. Avant d'être soumis à l'action du malt, le grain cru est cuit à température modérée dans la chaudière à trempe 14 avec de l'eau de façon à réa liser l'empesage de l'amidon contenu dans la céréale. L'amidon gélatinisé par ébullition dans l'eau est ensuite soumis à l'action des enzymes du malt dans le dispositif d'empâtage 3.

Ce procédé permet donc, dans la mesure où la léglislation l'autorise, de remplacer une partie du malt par une céréale de substitution, ce qui constitue une économie.

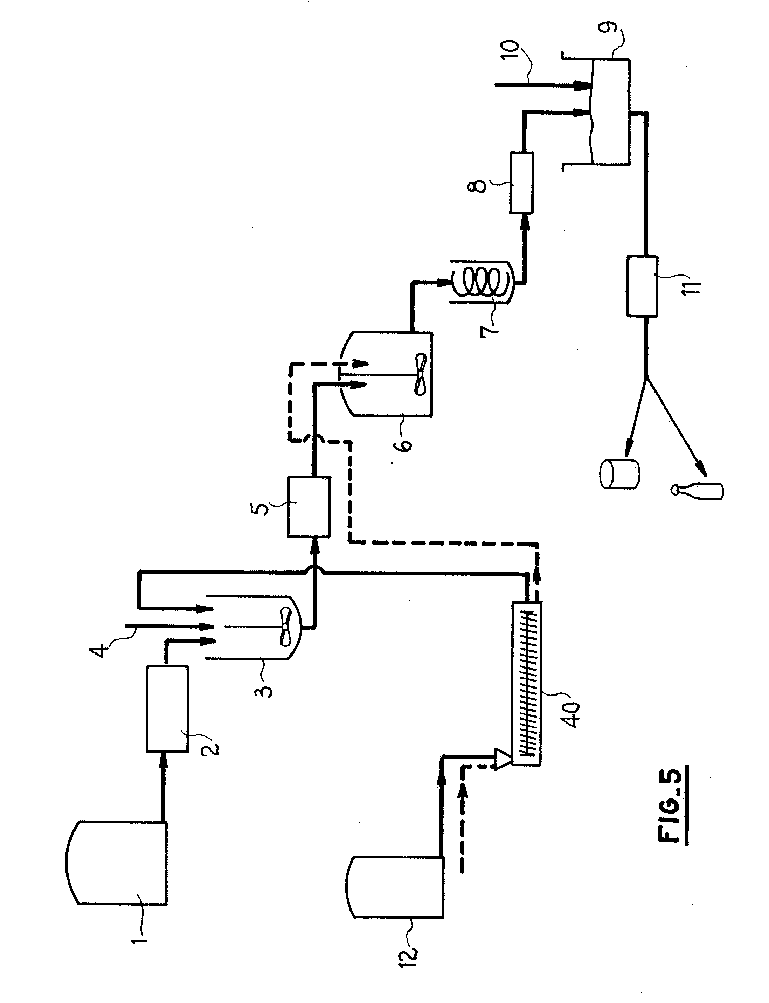

L'installation représentée à la figure 5 comporte également une ligne de préparation du moût sucré constituée par le concasseur 2, l'appareil de pré-empâtage 3 et un dispositif de saccharification 6, puis une étape de fermentation 9 et une étape de conditionnement de la bière.

Cette installation comporte, parallèlement à la ligne de préparation du malt, une ligne de préparation de la céréale de substitution. Mais dans ce cas, le concasseur et la chaudière à trempe 14 sont remplacés par un cuiseur-extrudeur 40. L'utilisation de ce cuiseur-extrudeur dans la ligne de préparation de la céréale de substitution permet de diminuer le pourcentage de malt et de porter le pourcentage de la céréale de substitution à 80 %.

De plus, le cuiseur-extrudeur 40 est utilisé alternativement pour pré-isomériser le houblon selon le procédé précédemment décrit. Cette disposition présente l'avantage de pouvoir supprimer la chaudière à trempe et d'amortir rapidement le cuiseur-extrudeur.

Dans les exemples décrits ci-dessus, le houblon extrudé est introduit, dans la ligne de préparation de la bière, au niveau du chargement de la chaudière à moût, mais il est également possible de l'introduire juste avant fermentation dans le moût encore chaud, avant refroidissement, ou avant la filtration finale.

D'une manière générale, le procédé de pré-isomérisation du houblon selon l'invention permet d'obtenir un rendement de houblonnage nettement supérieur par rapport au procédé utilisé jusqu'à présent, ce qui représente un avantage économique significatif, tout en réalisant un produit comparable à celui obtenu par un houblonnage classique, notamment du point de vue organoleptique et indépendamment de l'intensité de l'amertume.

## Revendications

1.- Procédé de pré-isomérisation de houblon, notamment pour la préparation d'une bière ou d'une boisson analogue obtenue à partir de malt uniquement ou à partir de malt et d'au moins une céréale de substitution dans une ligne de préparation comprenant une opération d'obtention d'un moût sucré et une opération de fermentation dudit moût en présence de levures, caractérisé en ce que la pré-isomérisation est réalisée par cuisson-extrusion du houblon à une température inférieure à 120°C, par passage en continu dudit houblon préalablement séché et pressé dans un cuiseur-extrudeur à au moins deux vis, avec une quantité d'eau inférieure à 50 % en poids, le houblon extrudé étant ensuite mélangé au moût sucré dans la ligne de préparation de la boisson.

2.- Procédé selon la revendication 1, caractérisé en ce que la température de cuisson-extrusion du houblon est maintenue entre 100°C et 120°C et de préférence entre 105°C et 115°C.

3.- Procédé selon les revendications 1 et 2, caractérisé en ce que la quantité d'eau introduite avec le houblon dans le cuiseur extrudeur est comprise entre 35 et 50 % en poids et l'eau a un pH compris entre 7 et 9.

4.- Procédé selon les revendications 1 et 2, caractérisé en ce que la quantité d'eau introduite avec le houblon dans le cuiseur-extrudeur est comprise entre 20 et 35 % en poids et l'eau a un pH compris entre 9 et 11.

5.- Procédé selon l'une des revendications précédentes, caractérisé en ce que le houblon extrudé est introduit dans la ligne de préparation de la boisson juste avant fermentation dans le moût encore chaud.

6.- Procédé selon l'une des revendications précédentes, caractérisé en ce que l'isomérisation du houblon dans le cuiseur-extrudeur est réalisée en alternance avec une opération d'empesage de la céréale de substitution.

**FIG.1**

FIG.2

FIG.3

**FIG. 4**

0277865

FIG.5